# EUROPÄISCHE PATENTSCHRIFT

(11) **EP 2 404 493 B1**
(45) Veröffentlichungstag und Bekanntmachung des Hinweises auf die Patenterteilung: **06.12.2017**
(21) Anmeldenummer: 11004863.4
(22) Anmeldetag: 15.06.2011
(51) Int. Cl.: A01B 63/10, A01B 63/112

(54) **Hubwerk**
Hoisting gear
Dispositif de levage

(30) Priorität: 08.07.2010 DE 102010026453
(43) Veröffentlichungstag der Anmeldung: 11.01.2012
(73) Patentinhaber: Robert Bosch GmbH, 70442 Stuttgart (DE)
(72) Erfinder: Jessen, Sönke, 71732 Tamm (DE); Fauser, Dominik, 71546 Aspach (DE)
(74) Vertreter: Thürer, Andreas

(56) Entgegenhaltungen:
- EP-A1- 1 129 606
- EP-A2- 2 031 256
- DE-A1- 10 131 559
- GB-A- 2 150 805
- US-A- 4 807 136

## Beschreibung

Die Erfindung betrifft ein Hubwerk gemäß dem Oberbegriff des Patentanspruchs 1 und ein Verfahren zum Betrieb eines Hubwerks.

In der Druckschrift DE 10 2007 040 877 A1 ist ein Hubwerk offenbart, das einen doppelt wirkenden Zylinder hat, über den wahlweise eine Hebe- bzw. Entlastungskraft oder eine Andrückkraft auf das Hubwerk und damit auf ein damit verbundenes Anbaugerät übertragen werden kann. Dabei ist zur Versorgung des Zylinders eine hydraulische Schaltung mit Entlastungsdruckregelung vorgesehen.

Nachteilig an derartigen Hubwerken ist, dass die an das Anbaugerät übertragene Hebe- bzw. Entlastungskraft und die Andrückkraft von der Hubhöhe des Hubwerks abhängen. Das liegt insbesondere daran, dass der Zylinder seine Kraft mit unterschiedlichen Wirkungsgraden an das Hubwerk (insbesondere an einen Unterlenker) überträgt. Dieser Effekt entsteht durch unterschiedliche Winkel zwischen dem Zylinder und dem Unterlenker in Abhängigkeit von der Hubhöhe des Hubwerkes.

Dem gegenüber liegt der Erfindung die Aufgabe zu Grunde, ein Hubwerk zu schaffen, dessen Hebe- bzw. Entlastungskraft oder dessen Andrückkraft unabhängig von der Hubhöhe geregelt sind.

Diese Aufgabe wird gelöst durch ein Hubwerk mit den Merkmalen des Patentanspruchs 1 und durch ein Verfahren zum Betreiben eines Hubwerks mit den Merkmalen des Patentanspruchs 5.

Das erfindungsgemäße Hubwerk für eine mobile Arbeitsmaschine, z.B. für einen Traktor, hat einen Arbeitszylinder, über den eine Zylinderkraft mit unterschiedlichen Wirkungsgraden an das Hubwerk übertragbar ist. Die Zylinderkraft wirkt insbesondere auch über einen Kolben und über eine Kolbenstange des Arbeitszylinders. Dabei ist ein Arbeitsdruck des Arbeitszylinders in Abhängigkeit des Wirkungsgrades regelbar. Damit kann die Hebe- bzw. Entlastungskraft oder die Andrückkraft (je nach Wirkrichtung des Arbeitszylinders) unabhängig von der Hubhöhe geregelt und dabei konstant gehalten werden.

Weitere vorteilhafte Ausgestaltungen der Erfindung sind in den abhängigen Patentansprüchen beschrieben.

Bei einer bevorzugten Weiterbildung bzw. bei einem bevorzugten Anwendungsfall der Erfindung entstehen die unterschiedlichen Wirkungsgrade durch unterschiedliche Anstellwinkel zwischen dem Arbeitszylinder und einer Koppelstange bzw. einem Lenker, insbesondere Unterlenker. Somit hängen die unterschiedlichen Wirkungsgrade von unterschiedlichen Anstellwinkeln des Arbeitszylinders gegenüber der Koppelstange bzw. dem Lenker ab.

Bei einer bevorzugten Weiterbildung hat das Hubwerk ein proportionales Druckbegrenzungsventil, das an einer an den Arbeitszylinder angeschlossenen Arbeitsleitung angeordnet ist. Damit kann der Druck geregelt werden.

Bei einer bevorzugten Weiterbildung hat der Arbeitzylinder zwei Druckräume und ist doppelt wirkend, wobei jeder Druckraum mit dem Arbeitsdruck beaufschlagbar ist. Damit lassen sich Hebe- bzw. Entlastungskräfte und Andrückkräfte mit dem selben erfindungsgemäßen Hubwerk erzeugen, die beide unabhängig von der Hubhöhe geregelt werden können.

Bei dem erfindungsgemäßen Verfahren zum Betrieb eines Hubwerks, z.B. eines Fronthubwerks, einer mobilen Arbeitsmaschine, z.B. eines Traktors, wird ein Arbeitsdruck eines Arbeitszylinders in Abhängigkeit eines Wirkungsgrades einer durch den Arbeitsdruck erzeugten und vom Arbeitszylinder an das Hubwerk übertragenen Zylinderkraft geregelt. Damit können die Hebe- bzw. Entlastungskraft oder die Andrückkraft (je nach Wirkrichtung des Arbeitszylinders) unabhängig von der Hubhöhe geregelt werden.

Bei einer bevorzugten Weiterbildung des erfindungsgemäßen Verfahrens wird der Arbeitsdruck derart geregelt, dass Unterschiede des Wirkungsgrades kompensiert werden. Damit können die Hebe- bzw. Entlastungskraft oder die Andrückkraft (je nach Wirkrichtung des Arbeitszylinders) unabhängig von der Hubhöhe konstant gehalten werden.

Bei einer bevorzugten Weiterbildung bzw. bei einem bevorzugten Anwendungsfall hängt der Wirkungsgrad von einem Angriffswinkel der Zylinderkraft ab oder der Wirkungsgrad wird sogar vom Angriffswinkel bestimmt. Der Arbeitsdruck wird also in Abhängigkeit dieses Angriffswinkels geregelt.

Es wird besonders bevorzugt, wenn der Arbeitsdruck bei einem Angriffswinkel von 90 Grad auf einen geringeren Wert geregelt wird, als bei einem Angriffswinkel größer oder kleiner als 90 Grad.

Bei einer bevorzugten Weiterbildung bzw. bei einem bevorzugten Anwendungsfall ergibt sich der Angriffswinkel zwischen dem Arbeitszylinder und einer Koppelstange oder einem Lenker - insbesondere Unterlenker - des Hubwerks.

Bei einer vorteilhaften Ausführungsform ist ein erster Endabschnitt der Koppelstange bzw. des Lenkers an der mobilen Arbeitsmaschine angelenkt, während ein zweiter Endabschnitt über einen Koppelpunkt mit einem Anbaugerät verbunden ist.

Bei einer bevorzugten Weiterbildung bzw. bei einem bevorzugten Anwendungsfall der Erfindung wird das Anbaugerät abhängig von einem Bodenprofil betrieben, bei denen Bodenunebenheiten über das Hubwerk "gefolgt" werden muss. Beispiele für derartige Anbaugeräte sind Mähwerke, Schneepflüge und Packerwalzen, Dabei wird an das Anbaugerät über den Koppelpunkt eine im Wesentlichen konstante Hebe- bzw. Entlastungskraft oder Andrückkraft übertragen.

Der Arbeitsdruck kann über ein proportionales Druckbegrenzungsventil eingestellt werden, das an einer an den Arbeitszylinder angeschlossenen Arbeitsleitung angeordnet ist.

Im Folgenden werden anhand der Figuren verschiedene Ausführungsbeispiele der Erfindung detailliert beschrieben. Es zeigen:
Figur 1 ein erstes Ausführungsbeispiel eines erfindungsgemäßen Hubwerks in einer seitlichen schematischen Darstellung;
Figur 2 einen Hydraulikschaltplan eines zweiten Ausführungsbeispiels eines erfindungsgemäßen Hubwerks;
Figuren 3 bis 5 einen Ausschnitt eines dritten Ausführungsbeispiels eines erfindungsgemäßen Hubwerks in drei verschiedenen Hubhöhen;
Figur 6 ein Diagramm, das den Zusammenhang zwischen Hubhöhe und Arbeitsdruck eines vierten Ausführungsbeispiels eines erfindungsgemäßen Hubwerks zeigt; und
Figur 7 eine Prinzipdarstellung eines Bedienfelds eines erfindungsgemäßen Hubwerks.

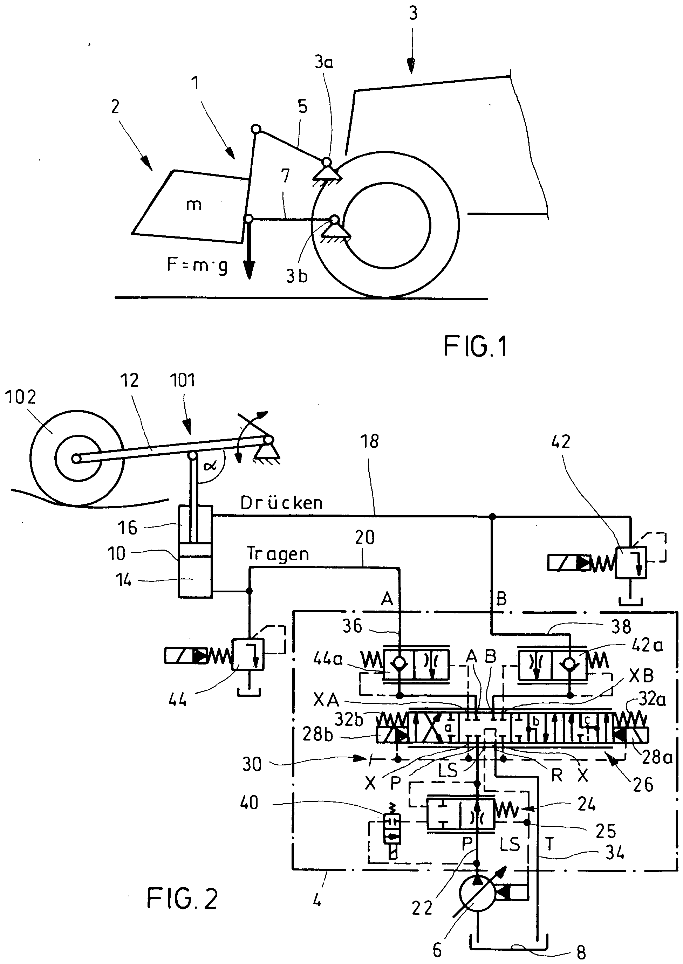

Figur 1 zeigt ein erstes Ausführungsbeispiel eines erfindungsgemäßen Hubwerks in einer seitlichen schematischen Darstellung. Es ist als Fronthubwerk 1 ausgeführt und an einem vorderen Bereich eines Traktors 3 über drei Lager befestigt, von denen in Figur 1 nur zwei Lager 3a, 3b gezeigt sind. Das Fronthubwerk 1 trägt ein symbolisch dargestelltes Anbaugerät 2, beispielsweise ein Mähwerk. Das Fronthubwerk 1 hat zumindest einen Oberlenker 5 und zwei Unterlenker, von denen in Figur 1 nur ein Unterlenker 7 dargestellt ist. An den vorderen Endabschnitten der Unterlenker 7 ist je ein Koppelpunkt angeordnet über den eine Gewichtskraft F des Anbaugerätes an den Traktor 3 übertragen wird. Ein Arbeitszylinder des Fronthubwerks 1 ist in Figur 1 nicht dargestellt.

Figur 2 zeigt einen Hydraulikschaltplan eines zweiten Ausführungsbeispiels eines erfindungsgemäßen Hubwerks 101 und einen Teil des Hubwerks 101, von dem ein symbolisch dargestelltes Anbaugerät 102 getragen wird. Die Ansteuerung des Hubwerks 101 erfolgt über eine Hubwerksventilanordung 4, über die Druckräume 14, 16 eines Arbeitszylinders 10 mit einer Pumpe 6 oder einem Tank 8 verbindbar sind. Über den Arbeitszylinder 10 ist eine das Anbaugerät 2 tragende am Traktor angelenkte Lenkeranordnung, von der in Figur 2 nur ein Unterlenker 12 gezeigt ist, zum Anheben oder Absenken des Anbaugerätes 2 verschwenkbar. Der Arbeitszylinder 10 hat einen in Richtung "Tragen" wirksamen Bodenraum 14 und einen in Richtung "Drücken" wirksamen Ringraum 16, die jeweils über Arbeitsleitungen 18, 20 mit Arbeitsanschlüssen A, B der Hubwerksventilanordnung 4 verbunden sind.

Üblicherweise sind diese Hubwerksventilanordnungen in Scheibenbauweise ausgeführt und in einem (in Figur 2 nicht gezeigten) Mobilsteuerblock des Traktors integriert.

Die Hubwerksventilanordung 4 hat einen Druckanschluss P und einen Tankanschluss T, die mit der Pumpe 6 bzw. mit dem Tank 8 verbunden sind.

Die Hubwerksventilanordnung 4 ist als Load-Sensing-System ausgeführt. Dazu ist in einem an den Anschluss P angeschlossenen Zulaufkanal 22 eine LS-Druckwaage 24 angeordnet, die in Öffnungsrichtung von der Kraft einer Feder und dem Lastdruck des Arbeitszylinders 10 in einem Load-Sensing-Kanal 25 und in Schließrichtung vom Druck stromabwärts der LS-Druckwaage 24 beaufschlagt ist. Der Zulaufkanal 22 führt zum Druckanschluss P eines stetig verstellbaren Wegeventils 26, das über eine Pilotventilanordnung 28a, 28b verstellbar ist. Diese besteht beispielsweise aus über einen Joystick ansteuerbaren Druckreduzierventilen, die an die Steuerölversorgung 30 angeschlossen sind. Ein Ventilschieber des Wegeventils 28 ist über eine Zentrierfederanordnung 32a, 32b in eine (in Figur 2 gezeigte) Grundposition vorgespannt, in der der Druckanschluss P sowie zwei Arbeitsanschlüsse A, B und Steueranschlüsse XA, XB, X des Wegeventils 28 abgesperrt sowie ein Load-Sensing-Anschluss LS mit einem Rücklaufanschluss R des Wegeventils 28 verbunden ist. Der Rücklaufanschluss R ist über einen Ablaufkanal 34 mit dem Tankanschluss T der Hubwerksventilanordnung 4 verbunden.

Durch geeignete Einstellung der Pilotventilanordnung 28a, 28b kann der Ventilschieber des Wegeventils 26 aus seiner Grundposition in die mit (a) gekennzeichneten Positionen verstellt werden, in denen über eine Zumessblende eine Druckmittelverbindung vom Eingangsanschluss P zum Arbeitsanschluss B aufgesteuert wird, so dass entsprechend Druckmittel in den Ringraum 16 des Arbeitszylinders 10 gefördert wird (Funktion "Drücken"). Das dabei aus dem Bodenraum 14 verdrängte Druckmittel strömt über den mit dem Rücklaufanschluss R verbundenen Arbeitsanschluss A zum Tank 8 ab. Beim Verstellen in die mit (b) gekennzeichneten Positionen wird über die Zumessblende eine Druckmittelverbindung vom Druckanschluss P zum Arbeitsanschluss A und der Arbeitsanschluss B des Wegeventils 26 mit dem Rücklaufanschluss R verbunden, so dass zum Entlasten oder zum Anheben des Anbaugerätes Druckmittel in den Bodenraum 14 gefördert wird und das aus dem Ringraum 16 verdrängte Druckmittel zum Tank 8 abströmt (Funktion "Tragen").

Beim Verschieben des Ventilschiebers des Wegeventils 26 in seine mit (c) gekennzeichnete Schwimmstellung sind die beiden Arbeitsanschlüsse A, B des Wegeventils 26 und damit auch die beiden Druckräume 14, 16 des Arbeitszylinders 10 mit dem Rücklaufanschluss R verbunden, so dass das Anbaugerät 2 lastfrei auf dem Boden aufliegt.

Die beiden Arbeitsanschlüsse A, B des Wegeventils 26 sind über einen Vorlaufkanal 36 bzw. einen Ablaufkanal 38 mit den Arbeitsanschlüssen A, B der Hubwerksventilanordnung 4 verbunden. In den Kanälen 36, 38 ist jeweils ein Senkenmodul 42a, 44a angeordnet, das in einer federvorgespannten Grundposition als entsperrbares Rückschlagventil zu leckölfreien Einspannung des Arbeitszylinders 10 dient und in Regelpositionen den vom Arbeitszylinder 10 zurückströmenden Druckmittelvolumenstrom im Sinne einer Ablaufregelung steuert. Hierzu ist jedes Senkenmodul 42a, 44a in Richtung seiner Rückschlagposition vom Druck an dem zugeordneten Arbeitsanschluss A, B des Wegeventils 26 und in Richtung seiner Öffnungs-/Drosselpositionen durch den Steuerdruck der Steuerölversorgung 30 beaufschlagt.

Ein Lastdruck des Arbeitszylinders 10 wird über den Load-Sensing-Anschluss LS des Wegeventils 26 abgegriffen und beaufschlagt die Individualdruckwaage 24 - wie bereits erwähnt - in Öffnungsrichtung.

Zum Ausfahren des Arbeitszylinders 10 wird das Wegeventil 26 in Richtung seiner Tragen-Positionen (b) verstellt, so dass das Druckmittel über den Zulaufkanal 22, die Individualdruckwaage 24, die aufgesteuerte Zumessblende des Wegeventils 26, den Arbeitsanschluss A des Wegeventils 26, das Rückschlagventil des Senkenmoduls 44a, den Vorlaufkanal 36 und die Arbeitsleitung 20 in den Bodenraum 14 gefördert wird. Ein Pumpendruck ist gemäß dem Load-Sensing-System dabei so eingestellt, dass er stets um eine vorbestimmte Druckdifferenz oberhalb des höchsten Lastdrucks aller Verbraucher (des Arbeitszylinders 10 und weiterer nicht gezeigter Verbraucher) liegt. Das beim Ausfahren des Arbeitszylinders 10 aus dem Ringraum 16 verdrängte Druckmittel strömt über die Arbeitsleitung 18, den Ablaufkanal 38, das über den Steuerdruck in der Steuerölversorgung 30 aufgesteuerte Senkenmodul 42a, die Anschlüsse B, R des Wegeventils 26 und den Ablaufkanal 34 zum Tank 8 ab. Das Senkenmodul 42a wirkt dabei als Ablaufdruckwaage, über die der ablaufende Druckmittelvolumenstrom in gewissem Umfang geregelt wird.

Das Einfahren des Arbeitszylinders 10 und damit das Absenken des Anbaugerätes 2 aus einer oberen Hubwerkslage und ggf. ein Andrücken des Anbaugerätes 2 erfolgt entsprechend durch Verstellen des Wegeventils 26 in Richtung seiner mit (a) gekennzeichneten Drücken-Positionen.

Bei dem in Figur 2 dargestellten zweiten Ausführungsbeispiel kann die Individualdruckwaage 24 in ihrer Schließposition fixiert werden, in dem eine in Schließrichtung wirksame Steuerfläche über ein elektrisch betätigtes 2/2-Wege-Pilotventil 40 mit dem Druck stromaufwärts der Individualdruckwaage 24 beaufschlagt wird, der - wie oben erwähnt - in jedem Fall größer als der Lastdruck am Arbeitszylinder 10 ist, so dass die Individualdruckwaage 24 geschlossen gehalten wird. Durch diese Maßnahme ist es möglich, trotz aufgesteuerter Zumessblende den Druckmittelströmungspfad zwischen Pumpe 6 und Wegeventil 26 abzusperren.

Der Druck in der Arbeitsleitung 18 kann über ein stetig verstellbares Drücken-Druckbegrenzungsventil 42 begrenzt werden, so dass der Druck im Ringraum 16 unabhängig von der Einstellung des Wegeventils 26 und von dem Pumpendruck, beispielsweise im Bereich zwischen 5 bis 230 bar einstellbar ist. Auf diese Weise kann beispielsweise durch Verstellen des Drücken-Druckbegrenzungsventils 42 auf seinen Minimaldruck, beispielsweise 5 bar, das eigentlich doppelt wirkende Hubwerk 1 einfach wirkend betrieben werden, so dass das Anbaugerät 2 auch bei Einstellung des Wegeventils 26 in seine Drücken-Positionen (a) praktisch nur auf Grund seines Eigengewichtes absinkt. Nach dem Absenken kann das Wegeventil 26 dann in seine Schwimmstellung (c) verstellt werden, so dass eventuelle Unebenheiten des Bodens ausgeglichen werden können.

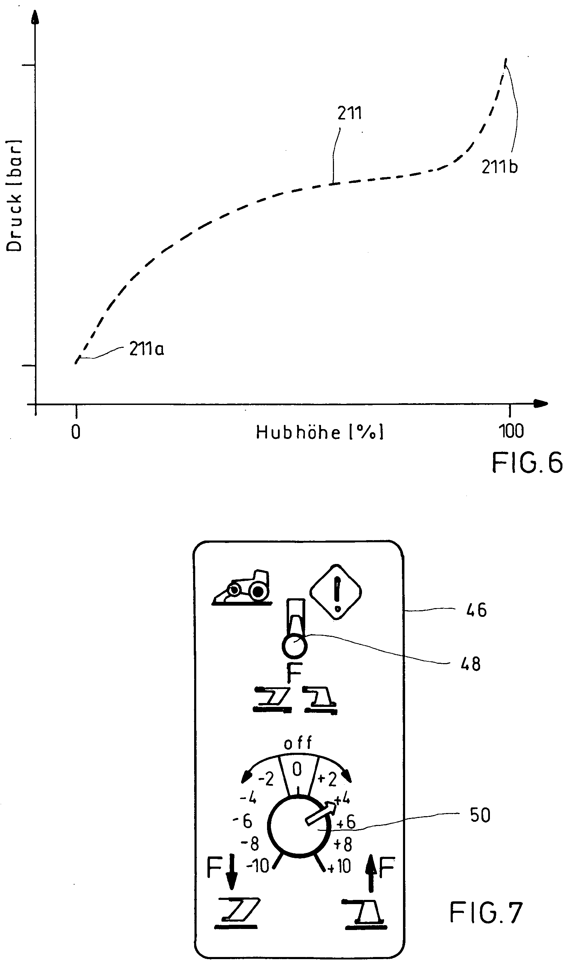

Außerdem ist in der Arbeitsleitung 20 ein Entlasten-Druckbegrenzungsventil 44 vorgesehen, das ebenfalls stetig verstellbar ausgeführt ist, und über das der Druck in der Arbeitsleitung 20 beispielsweise auf Werte zwischen 5 bis 230 bar begrenzt werden kann. Das Entlasten-Druckbegrenzungsventil 44 ist mit einer abfallenden Kennlinie ausgeführt und über eine vergleichsweise starke Feder in Richtung des maximalen Drucks vorgespannt. Die Einstellung des zu begrenzenden Drucks und damit der zu begrenzenden Hebekraft des Arbeitszylinders 10 erfolgt über einen proportional verstellbaren Elektromagneten, der entgegen der Feder wirkt. Dieses Entlasten-Druckbegrenzungsventil 44 ermöglicht eine Entlastungsdruckregelung, die mit Bezug zu Figur 7 näher beschrieben wird.

Weiterhin ermöglichen die beiden Druckbegrenzungsventile 42, 44 eine erfindungsgemäße Regelung des Arbeitsdrucks der beiden Arbeitsleitungen 18, 20 und damit in den beiden Druckräumen 14, 16, bei der Unterschiede in den Wirkungsgraden der von dem Arbeitszylinder 10 auf den Unterlenker 12 ausgeübten Kraft kompensiert werden. Der Wirkungsgrad hängt von einem Winkel a ab, der zwischen einer Kolbenstange des Arbeitszylinders 10 und dem Unterlenker 12 besteht.

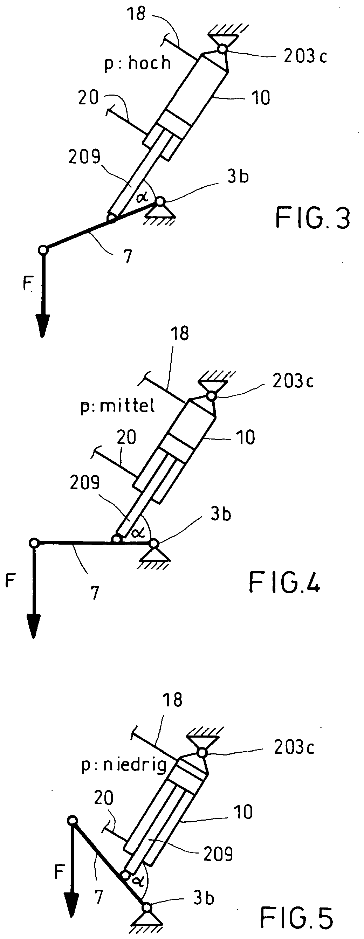

Die Figuren 3 bis 5 zeigen jeweils einen Ausschnitt eines dritten Ausführungsbeispiels eines erfindungsgemäßen Hubwerks in drei verschiedenen Hubhöhen. Das Hubwerk hat den an das Lager 3b des Traktors angelenkten Unterlenker 7 gemäß Figur 1. Das dritte Ausführungsbeispiel hat weiterhin den Arbeitszylinder 10 gemäß Figur 2, der an ein Lager 203c des Traktors drehbar gekoppelt ist. Eine Kolbenstange 209 des Arbeitszylinders 10 ist von oben an den Unterlenker 7 angekoppelt. Das dritte Ausführungsbeispiel hat weiterhin eine hydraulische Versorgung gemäß Figur 2 mit der Arbeitsleitung 18 zum "Drücken" und mit der Arbeitsleitung 20 zum Entlasten bzw. "Tragen".

Der Arbeitszylinder 10 mit der Kolbenstange 209 ist bei allen gezeigten Hubhöhen schräg zum (nicht gezeigten) Boden angestellt. Der Unterlenker 7 ist bei einer in Figur 4 gezeigten mittleren Hubhöhe etwa waagerecht zum Boden, während er bei niedrigen Hubhöhen gemäß Figur 3 und bei hohen Hubhöhen gemäß Figur 5 schräg zum Boden angestellt ist. Dabei schwenkt der Unterlenker 7 über einen vergleichsweise großen Winkelbereich um das Lager 3b, während der Arbeitszylinder 10 über einen vergleichsweise kleinen Winkelbereich um das Lager 203c schwenkt. Bei diesem Funktionsprinzip können sich zwischen der Kolbenstange 209 und dem Unterlenker 7 theoretisch Anstellwinkel a in einem Bereich von 0 bis 180° ergeben, wobei dieser Winkelbereich in der Praxis deutlich kleiner gehalten wird. In den drei beispielhaften Hubhöhen des dritten Ausführungsbeispiels ist in Figur 3 ein Anstellwinkel von a ^{∼} 34°, in Figur 4 ein Anstellwinkel von a ^{∼} 57° und in Figur 5 ein Anstellwinkel von a ^{∼} 106° gezeigt.

Bei einer vorbestimmten Gewichtskraft F des in den Figuren 3 bis 5 nicht gezeigten Anbaugerätes oder um eine vorbestimmte von der Hubhöhe unabhängige Entlastungskraft auf das Anbaugerät auszuüben, muss über den Zylinder 10 eine vom Anstellwinkel a abhängige Zylinderkraft aufgebracht werden. Diese ist minimal, wenn der Anstellwinkel a ^{∼} 90° beträgt und erhöht sich überproportional, wenn sich der Anstellwinkel a in Richtung 0° verringert oder in Richtung 180° vergrößert. Bei der in Figur 5 gezeigten Hubhöhe ist somit die vom Zylinder 10 aufzubringende Zylinderkraft recht nah an einem Minimum, während sie bei der in Figur 4 gezeigten Hubhöhe deutlich erhöht und bei der in Figur 3 gezeigten Hubhöhe nochmals deutlich erhöht ist.

Bei dem erfindungsgemäßen Hubwerk wird der Druck p in der Arbeitsleitung 18 und/oder in der Arbeitsleitung 20 derart in Abhängigkeit vom Anstellwinkel a geregelt, dass je nach Einsatz des Hubwerks eine konstante Entlastungskraft oder dieser entgegen gerichtete Andrückkraft erzeugt wird. Diese Kräfte wirken in einer Richtung senkrecht zum Boden bzw. in Wirkrichtung des Hubwerks. Diese erfindungsgemäße Regelung ist z.B. dann von Vorteil, wenn das Anbaugerät bodenprofilgesteuert ist. Dies kann z.B. ein Mähwerk sein, das nicht mit seiner vollen Gewichtskraft F auf dem Boden lasten soll, sondern stets um eine gewisse Entlastungskraft vom erfindungsgemäßen Hubwerk entlastet werden soll. Wenn sich auf Grund von Unebenheiten des Bodens die Hubhöhe des erfindungsgemäßen Hubwerks anpassen muss, ist zur Aufrechterhaltung der vorbestimmten Entlastungskraft eine veränderte Zylinderkraft nötig. Diese wird durch entsprechende Druckanpassung in den Arbeitsleitungen 18 und 20 erreicht. Die erfindungsgemäße Regelung der Drücke in den Arbeitsleitungen 18 und 20 kann über das jeweils zugeordnete Druckbegrenzungsventil 42, 44 erfolgen (vgl. Figur 2).

Figur 6 zeigt ein Diagramm mit einer Kennlinie 211 zur Regelung eines vierten Ausführungsbeispiels eines erfindungsgemäßen Hubwerks. Dabei ist auf der x-Achse die Hubhöhe des Hubwerks in einem Bereich von 0 bis 100 % aufgetragen, während auf der y-Achse der Druck p in einem der Druckräume des Arbeitszylinders aufgetragen ist. Die gezeigte Änderung des Drucks führt - wie mit Bezug zu den Figuren 3 bis 5 erläutert - zu einer Veränderung der Zylinderkraft, so dass die vorbestimmte Entlastungskraft oder Andrückkraft konstant bleibt.

Bei einem mit dem Bezugszeichen 211a markierten Betriebszustand ist eine minimale Hubhöhe gegeben, bei der der Anstellwinkel a zwischen dem Arbeitszylinder und dem Unterlenker maximal ist, so dass ein vergleichsweise geringer Druck p im Druckraum zur Erzeugung der vorbestimmten Entlastungskraft oder Andrückkraft nötig ist.

Im Betriebszustand 211b hat das Hubwerk seine maximale Hubhöhe erreicht, wobei der Anstellwinkel a sich derart verändert (verringert oder vergrößert) hat, dass zur Bereitstellung der konstanten Entlastungskraft oder Andrückkraft der Druck und damit die Zylinderkraft entlang der Kennlinie 211 erhöht werden mussten.

In Figur 7 ist ein Teil eines Bedienfeldes des Traktors dargestellt, über das die beiden Druckbegrenzungsventile 42, 44 des doppelt wirkenden Hubwerks 101 (vgl. Figur 2) zum Einstellen eines Maximaldrucks in den Arbeitsleitungen 18, 20 und somit zum Einstellen der maximalen Kraft des Hubwerks 101 verstellt werden kann. Das Bedienfeld 46 hat einen Schalter 48, über den die Druckregelung einschaltbar ist. Dazu wird der Schalter 48 in die in Figur 7 gezeigte untere Stellung geschaltet. Bei Verstellen des Schalters 48 nach oben wird das Drücken-Druckbegrenzungsventil 42 auf Maximaldruck eingestellt, so dass der Traktor, wie oben links in Figur 7 dargestellt, durch Absenken des Hubwerks 101 ausgehoben werden kann.

Am Bedienfeld 46 ist des Weiteren ein Potenziometer 50 vorgesehen, über das durch Drehen (in Figur 7) nach links der über das Drücken-Druckbegrenzungsventil 42 begrenzte Druck oder durch Drehen (in Figur 7) nach rechts der über das Entlasten-Druckbegrenzungsventil 44 begrenzte Druck einstellbar ist. Demzufolge kann die Entlastungsdruckregelung durch Verdrehen des Potenziometers 50 (in Figur 7) nach rechts aktiviert werden, wobei der Entlastungsdruck mit zunehmender Verstellung des Potenziometers 50 aus der Grundposition ansteigt.

In der Neutralstellung (0) des Potenziometers 50 wird das Hubwerk 101 einfach wirkend betrieben, d.h. der Druck in der Arbeitsleitung 18 wird auf den Minimalwert begrenzt. Dabei wird das Entlasten-Druckbegrenzungsventil 44 stets auf den maximalen Druck eingestellt, damit das Anbaugerät sicher getragen werden kann. Die Ansteuerung des Hubwerks 101 erfolgt in üblicher Weise nach einer Lage- und/oder Zugkraftregelung. Dieser maximale Entlastungsdruck wird auch bei einem Stopp der elektrohydraulischen Hubwerksregelung, bei einer Verriegelung der elektrohydraulischen Hubwerksregelung, beispielsweise bei einem Traktorstart, im Fehlerfall usw. und in der Transportstellung, die über einen Modusschalter eingestellt ist vom Steuergerät der Hubwerksregelung voreingestellt.

Offenbart ist ein Hubwerk für eine mobile Arbeitsmaschine mit einem Arbeitszylinder, über den eine Kraft mit unterschiedlichen Wirkungsgraden an das Hubwerk übertragbar ist. Dabei ist ein Arbeitsdruck des Arbeitszylinders in Abhängigkeit des Wirkungsgrades regelbar.

Offenbart ist weiterhin ein entsprechendes Verfahren zum Betrieb eines Hubwerks einer mobilen Arbeitsmaschine, wobei ein Arbeitsdruck eines Arbeitszylinders in Abhängigkeit eines Wirkungsgrades einer durch den Arbeitsdruck erzeugten vom Arbeitszylinder an das Hubwerk übertragenen Kraft geregelt wird.

## Patentansprüche

1. Hubwerk für eine mobile Arbeitsmaschine (3) mit einem Arbeitszylinder (10), über den eine Zylinderkraft mit unterschiedlichen Wirkungsgraden an das Hubwerk übertragbar ist, **dadurch gekennzeichnet, dass** ein Arbeitsdruck des Arbeitszylinders (10) in Abhängigkeit des Wirkungsgrades regelbar ist.

2. Hubwerk nach Anspruch 1, wobei die unterschiedlichen Wirkungsgrade von unterschiedlichen Anstellwinkeln (a) zwischen dem Arbeitszylinder (10) und einem Lenker (7) abhängig sind.

3. Hubwerk nach Anspruch 1 mit einem proportionalen Druckbegrenzungsventil (42, 44), das an einer an den Arbeitszylinder (10) angeschlossenen Arbeitsleitung (18, 20) angeordnet ist.

4. Hubwerk nach Anspruch 1, wobei der Arbeitzylinder (10) zwei Druckräume (14, 16) hat, wobei jeder Druckraum (14, 16) mit dem Arbeitsdruck beaufschlagbar ist.

5. Verfahren zum Betrieb eines Hubwerks einer mobilen Arbeitsmaschine, wobei ein Arbeitsdruck eines Arbeitszylinders (10) in Abhängigkeit eines Wirkungsgrades einer durch den Arbeitsdruck erzeugten vom Arbeitszylinder an das Hubwerk übertragenen Zylinderkraft geregelt wird.

6. Verfahren nach Anspruch 5, wobei der Arbeitsdruck derart geregelt wird, dass Unterschiede des Wirkungsgrades kompensiert werden.

7. Verfahren nach Anspruch 5, wobei der Wirkungsgrad von einem Angriffswinkel der Zylinderkraft abhängt.

8. Verfahren nach Anspruch 7, wobei der Arbeitsdruck bei einem Angriffswinkel von 90 Grad geringer ist, als bei einem Angriffswinkel größer oder kleiner als 90 Grad.

9. Verfahren nach Anspruch 7, wobei der Angriffswinkel gleich einem Anstellwinkel (a) zwischen dem Arbeitszylinder (10) und einem Lenker (7) ist.

10. Verfahren nach Anspruch 9, wobei ein erster Endabschnitt des Lenkers (7) an der mobilen Arbeitsmaschine (3) angelenkt ist, während ein zweiter Endabschnitt über einen Koppelpunkt mit einem Anbaugerät (2; 102) verbunden ist.

11. Verfahren nach Anspruch 10, wobei das Anbaugerät (2; 102) abhängig von einem Bodenprofil betrieben wird, und wobei an das Anbaugerät (2; 102) eine im Wesentlichen konstante Entlastungskraft oder Andrückkraft übertragen wird.

12. Verfahren nach Anspruch 5, wobei der Arbeitsdruck über ein proportionales Druckbegrenzungsventil (42, 44) eingestellt wird, das an einer an den Arbeitszylinder (10) angeschlossenen Arbeitsleitung (18, 20) angeordnet ist.

## Claims

1. Lifting device for a mobile working machine (3) having a working cylinder (10) via which a cylinder force with different efficiencies can be transmitted to the lifting device, **characterized in that** a working pressure of the working cylinder (10) can be controlled in dependence on the efficiency.

2. Lifting device according to Claim 1, wherein the different efficiencies are dependent on different angles of incidence (α) between the working cylinder (10) and a link (7).

3. Lifting device according to Claim 1 having a proportional pressure-limiting valve (42, 44) which is arranged on a working line (18, 20) connected to the working cylinder (10).

4. Lifting device according to Claim 1, wherein the working cylinder (10) has two pressure chambers (14, 16), wherein each pressure chamber (14, 16) can be charged with the working pressure.

5. Method for operating a lifting device of a mobile working machine, wherein a working pressure of a working cylinder (10) is controlled in dependence on an efficiency of a cylinder force which is produced by the working pressure and transmitted from the working cylinder to the lifting device.

6. Method according to Claim 5, wherein the working pressure is controlled in such a way that differences in the efficiency are compensated for.

7. Method according to Claim 5, wherein the efficiency depends on an angle of attack of the cylinder force.

8. Method according to Claim 7, wherein the working pressure is lower at an angle of attack of 90 degrees than at an angle of attack greater than or less than 90 degrees.

9. Method according to Claim 7, wherein the angle of attack is equal to an angle of incidence (α) between the working cylinder (10) and a link (7).

10. Method according to Claim 9, wherein a first end portion of the link (7) is articulated on the mobile working machine (3), while a second end portion is connected to an add-on unit (2; 102) via a coupling point.

11. Method according to Claim 10, wherein the add-on unit (2; 102) is operated in dependence on a ground profile, and wherein a substantially constant relief force or pressing force is transmitted to the add-on unit (2; 102).

12. Method according to Claim 5, wherein the working pressure is set via a proportional pressure-limiting valve (42, 44) which is arranged on a working line (18, 20) connected to the working cylinder (10).

## Revendications

1. Dispositif de levage pour une machine de travail mobile (3) avec un cylindre de travail (10), au moyen duquel une force du cylindre peut être transmise avec des rendements différents au dispositif de levage, **caractérisé en ce qu'**une pression de travail du cylindre de travail (10) est réglable en fonction du rendement.

2. Dispositif de levage selon la revendication 1, dans lequel les différents rendements dépendent des angles d'attaque différents (α) entre le cylindre de travail (10) et une bielle (7).

3. Dispositif de levage selon la revendication 1 avec une soupape de limitation de pression proportionnelle (42, 44), qui est disposée dans une conduite de travail (18, 20) raccordée au cylindre de travail (10).

4. Dispositif de levage selon la revendication 1, dans lequel le cylindre de travail (10) comporte deux chambres de pression (14, 16), dans lequel chaque chambre de pression (14, 16) peut être soumise à la pression de travail.

5. Procédé de conduite d'un dispositif de levage d'une machine de travail mobile, dans lequel on règle une pression de travail d'un cylindre de travail (10) en fonction d'un rendement d'une force du cylindre produite par la pression de travail et transmise du cylindre de travail au dispositif de levage.

6. Procédé selon la revendication 5, dans lequel on règle la pression de travail de telle manière que des différences du rendement soient compensées.

7. Procédé selon la revendication 5, dans lequel le rendement dépend d'un angle d'action de la force du cylindre.

8. Procédé selon la revendication 7, dans lequel la pression de travail pour un angle d'action de 90 degrés est plus faible que pour un angle d'action supérieur ou inférieur à 90 degrés.

9. Procédé selon la revendication 7, dans lequel l'angle d'action est égal à un angle d'attaque (α) entre le cylindre de travail (10) et une bielle (7).

10. Procédé selon la revendication 9, dans lequel une première partie d'extrémité de la bielle (7) est articulée à la machine de travail mobile (3), tandis qu'une deuxième partie d'extrémité est reliée par un point d'attelage à un équipement porté (2; 102).

11. Procédé selon la revendication 10, dans lequel on conduit l'équipement porté (2; 102) en fonction d'un profil du sol, et dans lequel on transmet à l'équipement porté (2; 102) une force de délestage ou une force de pression essentiellement constante.

12. Procédé selon la revendication 5, dans lequel on règle la pression de travail au moyen d'une soupape de limitation de pression proportionnelle (42, 44), qui est disposée dans une conduite de travail (18, 20) raccordée au cylindre de travail (10).
